# EUROPEAN PATENT APPLICATION

(11) **EP 4 375 063 A1**
(43) Date of publication of application: **29.05.2024**
(21) Application number: 22845793.3
(22) Date of filing: 07.07.2022
(51) Int. Cl.: B32B 27/30, B32B 9/00, B32B 27/32, B32B 27/36, B65D 65/40

(54) **PACKAGING MATERIAL, PACKAGING BAG AND PACKAGE**

(30) Priority: 19.07.2021 JP 2021118558
(71) Applicant: TOPPAN INC., Tokyo 110-0016 (JP)
(72) Inventor: SASAKI, Noriko, Tokyo 110-0016 (JP)
(74) Representative: Hoffmann Eitle
(86) International application number: PCT/JP2022/027004
(87) International publication number: WO 2023/002859

(57) **Abstract**

The present disclosure relates to a packaging material comprising a substrate layer, an intermediate layer, and a sealant layer, the intermediate layer comprising an intermediate layer substrate layer and a barrier coat layer containing a carboxylic acid polymer and a polyvalent metal compound, the intermediate layer being laminated so that the barrier coat layer is on a substrate layer side, all of the substrate layer, the intermediate layer substrate layer, and the sealant layer being polyolefin resin layers or polyester resin layers.

## Description

### [Technical Field]

The present invention relates to a packaging material, a packaging bag, and a packaging body.

### [Background Art]

With the growing demand for building a recycling-oriented society, packaging materials with high recyclability are required. As such a packaging material, a laminate for a packaging material is disclosed, in which a barrier film comprising a stretched polyolefin resin layer, a vapor-deposited film, a barrier coat layer, and a heat seal layer made of the same polyolefin as the barrier film are laminated (e.g., PTL 1).

Further, there is a known coating liquid that can form a gas barrier film by ion-crosslinking a carboxyl group-containing polymer using a polyvalent metal (e.g., PTL 2).

### [Citation List]

### [Patent Literature]

PTL 1: JP 2020-40257 A
PTL 2: JP 2005-126528 A

### [Summary of the Invention]

### [Technical Problem]

The coating liquid of PTL 2 can form a barrier film without the need for prolonged heat treatment at a high temperature, and thus can be easily applied to mono-material laminates using polyolefins etc. However, if packaging bags obtained from the coating liquid are filled with contents containing sulfur-containing amino acids, and heat sterilization treatment, such as boiling treatment or retort treatment, is performed, some packaging bags may not exhibit sufficient barrier performance.

The present invention has been made in view of the above circumstances, and an object thereof is to provide a packaging material having excellent recyclability and suitable for the packaging of contents containing sulfur-containing amino acids. Another object of the present disclosure is to provide a packaging bag and a packaging body, both of which use the packaging material.

### [Solution to Problem]

A packaging material according to one aspect of the present invention comprises a substrate layer, an intermediate layer, and a sealant layer, the intermediate layer comprising an intermediate layer substrate layer and a barrier coat layer containing a carboxylic acid polymer and a polyvalent metal compound, the intermediate layer being laminated so that the barrier coat layer is on a substrate layer side, and all of the substrate layer, the intermediate layer substrate layer, and the sealant layer are polyolefin resin layers or polyester resin layers.

The above packaging material is not only excellent in recyclability, but also suitable for the packaging of contents containing sulfur-containing amino acids. That is, even when a packaging bag formed from the above packaging material is filled with contents containing a sulfur-containing amino acid, and heat sterilization treatment, such as boiling treatment or retort treatment, is performed, the packaging bag can still have sufficient barrier performance. The inventors speculate that the reason for this is as follows. When using a barrier coat layer that exhibits barrier performance by crosslinking carboxylic acid polymers using metal ions, sulfur generated from the contents due to heat treatment tends to bind to the polyvalent metal ions, which are intended to crosslink the carboxylic acid polymers. Therefore, if the intermediate layer is not located correctly, the barrier coat layer cannot exhibit barrier performance, and as a result, the packaging bag does not have sufficient barrier performance. In contrast, with the packaging material of the present invention, in which particularly an intermediate layer is laminated so that the barrier coat layer is on the substrate layer side, it is considered that the formation of a crosslinked structure is less likely to be inhibited by sulfur, and that the packaging bag can have sufficient barrier performance.

In an embodiment of the packaging material, the intermediate layer may further comprise an inorganic vapor deposition layer between the intermediate layer substrate layer and the barrier coat layer.

In an embodiment of the packaging material, the polyolefin contained in the polyolefin resin layer may be polypropylene.

In an embodiment of the packaging material, the polyolefin contained in the intermediate layer substrate layer may be stretched polypropylene.

In an embodiment of the packaging material, the polyolefin contained in the polyolefin resin layer may be polyethylene.

In an embodiment of the packaging material, the polyolefin contained in the intermediate layer substrate layer may be high-density polyethylene.

In an embodiment of the packaging material, the polyester contained in the polyester resin layer may be polyethylene terephthalate.

In an embodiment of the packaging material, the polyester contained in the intermediate layer substrate layer may be polyethylene terephthalate having a crystallinity of 40% or more.

A packaging bag according to one aspect of the present invention is formed from the above packaging material. Such a packaging bag is considered to have excellent recyclability and be suitable for the packaging of contents containing sulfur-containing amino acids.

A packaging body according to one aspect of the present invention comprises the above packaging bag, and contents containing a sulfur-containing amino acid packaged in the packaging bag, the barrier coat layer having a crosslinked structure in which the carboxylic acid polymers are crosslinked with each other via polyvalent metal ions. The packaging body can be obtained in such a manner that the above packaging bag is filled with a content containing a sulfur-containing amino acid and sealed, and heat sterilization treatment, such as such as boiling treatment or retort treatment, is performed. Due to the heat sterilization treatment, the carboxylic acid polymers become crosslinked with each other by polyvalent metal ions in the barrier coat layer, and excellent barrier performance is exhibited; however, due to the use of the above packaging material, the exhibition of excellent barrier performance is not inhibited even when a content containing a sulfur-containing amino acid is packaged.

### [Advantageous Effects of the Invention]

The present invention can provide a packaging material having excellent recyclability and suitable for the packaging of contents containing sulfur-containing amino acids. Further, the present invention can provide a packaging bag and a packaging body, both of which use the packaging material.

### [Brief Description of the Drawings]

[Fig. 1] Fig. 1 is a cross-sectional view showing an aspect of the packaging material according to the present embodiment.
[Fig. 2] Fig. 2 is a cross-sectional view showing another aspect of the packaging material according to the present embodiment.

### [Description of the Embodiments]

Preferred embodiments of the present disclosure will now be described in detail with reference to the drawings in some cases. In the drawings, the same or corresponding parts are denoted by the same reference signs to omit duplicate description. Further, dimensional ratios of the drawings are not limited to the ratios shown in the drawings.

### <Packaging material>

The packaging material of the present embodiment is suitable for the packaging of contents containing sulfur-containing amino acids, and can be regarded as a packaging material for contents containing sulfur-containing amino acids. Examples of contents include meat, beans, and the like that contain sulfur-containing amino acids. The sulfur-containing amino acid may be, for example, methionine or cysteine. The cysteine may be, for example, L-cysteine (2-amino-3-sulfanyl propionic acid: HSCH₂CH(NH₂)COOH).

The packaging material of the present embodiment comprises a substrate layer, an intermediate layer, and a sealant layer. The intermediate layer comprises an intermediate layer substrate layer and a barrier coat layer containing a carboxylic acid polymer and a polyvalent metal compound. In the packaging material, the intermediate layer is laminated so that the barrier coat layer is on the substrate layer side. The substrate layer, intermediate layer substrate layer, and sealant layer are all polyolefin resin layers (all-polyolefin structure) or polyester resin layers (all-polyester structure).

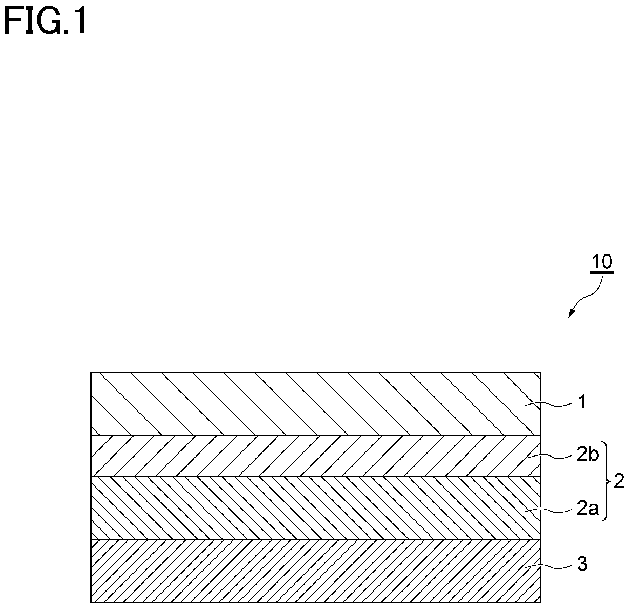

Fig. 1 is a cross-sectional view showing an aspect of the packaging material according to the present embodiment. The packaging material 10 comprises a substrate layer 1, an intermediate layer 2, and a sealant layer 3, and the intermediate layer 2 comprises an intermediate layer substrate layer 2a and a barrier coat layer 2b. The packaging material 10 may further comprise an adhesive layer between the substrate layer 1 and the intermediate layer 2 (barrier coat layer 2b), and between the intermediate layer 2 (intermediate layer substrate layer 2a) and the sealant layer 3.

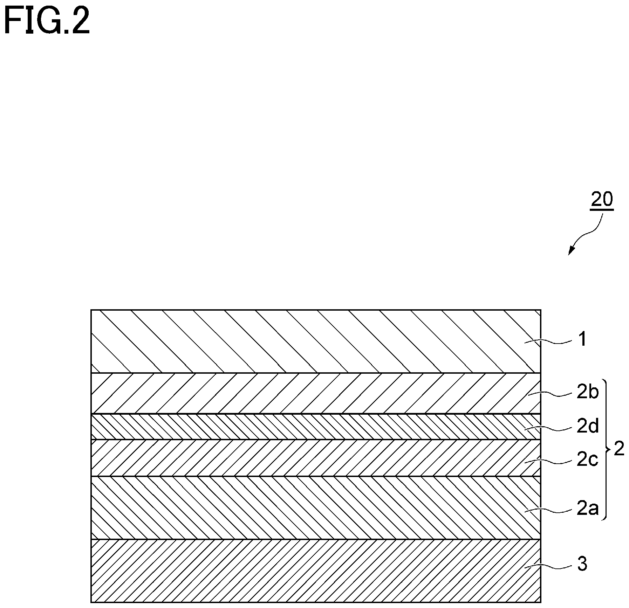

Fig. 2 is a cross-sectional view showing another aspect of the packaging material according to the present embodiment. The packaging material 20 comprises a substrate layer 1, an intermediate layer 2, and a sealant layer 3, and the intermediate layer 2 comprises an intermediate layer substrate layer 2a, an anchor coat layer 2c, an inorganic vapor deposition layer 2d, and a barrier coat layer 2b. The packaging material 20 may further comprise an adhesive layer between the substrate layer 1 and the intermediate layer 2, and between the intermediate layer 2 and the sealant layer 3.

### (Substrate layer)

The substrate layer is a resin film (plastic film) serving as a support. The substrate layer is a polyolefin resin layer or a polyester resin layer.

Examples of the polyolefin used to form the polyolefin resin layer include polyethylene, polypropylene, polymethylpentene, an ethylene-propylene copolymer, a propylene-butene copolymer, and the like. Among these, polyethylene and polypropylene can be preferably used, from the viewpoint of productivity. Examples of polyethylene include medium-density polyethylene (MDPE), high-density polyethylene (HDPE: e.g., one having a density of 0.925 g/cm³ or more), and the like, and MDPE and HDPE can be preferably used, from the viewpoint of suitability for heat sterilization treatment and processability for printing etc. Examples of polypropylene include stretched polypropylene (OPP), from the viewpoint of suitability for heat sterilization treatment and processability for printing etc. The method for stretching polypropylene is not particularly limited, and it may be stretched by any method, such as inflation stretching, uniaxial stretching, or biaxial stretching, as long as a dimensionally stable film can be supplied.

Examples of the polyester used to form the polyester resin layer include crystalline polyester, and specific examples include polybutylene terephthalate (PBT), polybutylene naphthalate (PBN), polyethylene terephthalate (PET), and the like.

The thickness of the substrate layer can be, for example, 5 µm to 10 mm, and may be 5 to 800 µm or 5 to 500 µm.

In order to improve the adhesion to the intermediate layer, the surface of the substrate layer may be subjected to various pretreatments, such as corona treatment, plasma treatment, and flame treatment, as long as the barrier performance is not impaired.

### (Intermediate layer)

The intermediate layer is a layer that imparts barrier performance to the packaging material. The barrier performance as mentioned herein refers to water vapor barrier performance and gas (oxygen) barrier performance. The intermediate layer is an important layer particularly for achieving gas barrier performance in the packaging material of the present embodiment.

### [Intermediate layer substrate layer]

The intermediate layer substrate layer is a layer for improving the barrier performance of the packaging material, and for forming a barrier coat layer. The intermediate layer substrate layer is a polyolefin resin layer or a polyester resin layer. The intermediate layer substrate layer may be a layer formed from the polyolefin or polyester mentioned as the substrate layer. When the polyolefin contained in the polyolefin resin layer is polypropylene, the polyolefin contained in the intermediate layer substrate layer may be a stretched polypropylene, from the viewpoint of barrier performance. When the polyolefin contained in the polyolefin resin layer is polyethylene, the polyolefin contained in the intermediate layer substrate layer may be a high-density polyethylene, from the viewpoint of barrier performance. When the polyester contained in the polyester resin layer is polyethylene terephthalate, the polyester contained in the intermediate layer substrate layer may be a polyethylene terephthalate with a crystallinity of 40% or more, from the viewpoint of barrier performance. The crystallinity may be 50% or more, or 60% or more. The upper limit of the crystallinity is not particularly limited, but can be 80% from the viewpoint of feasibility. The crystallinity is a value measured by FT-IR analysis using a reflection method.

The thickness of the intermediate layer substrate layer can be, for example, 20 to 50 µm, and may be 20 to 30 µm or 20 to 25 µm.

In order to improve the adhesion to the adjacent layer, the surface of the intermediate layer substrate layer may be subjected to various pretreatments, such as corona treatment, plasma treatment, and flame treatment, as long as the barrier performance is not impaired.

### [Barrier coat layer]

The barrier coat layer is a layer for exhibiting water vapor barrier performance and gas barrier performance (particularly gas barrier performance). The barrier coat layer can trap sulfur generated from contents containing a sulfur-containing amino acid using a polyvalent metal compound. The barrier coat layer is a layer containing a carboxylic acid polymer and a polyvalent metal compound, and is formed, for example, by applying a barrier coating agent (coating liquid) containing a carboxylic acid polymer and a polyvalent metal compound to an intermediate layer substrate layer, and then drying the barrier coating agent. The barrier coating agent may further contain a silicon-containing compound and various additives (e.g., a dispersant) in addition to a carboxylic acid polymer and a polyvalent metal compound. The barrier coating agent may contain at least one of water and an organic solvent.

As the coating method, a known method can be used without particular limitation. Examples thereof include an immersion method (dipping method), or methods that use a sprayer, a coater, a printer, a brush, or the like. In addition, examples of the types of coaters and printers used in these methods, and the coating methods thereof may include a gravure coater, a reverse-roll coater, a micro gravure coater, a combined chamber and doctor coater, an air-knife coater, a dip coater, a bar coater, a comma coater, a die coater, and the like for a direct gravure method, a reverse gravure method, a kiss reverse gravure method, an offset gravure method, and the like.

The coating amount of the barrier coat layer (the mass per m² after drying the barrier coating agent) can be 0.2 to 1.0 g/m², and may be 0.3 to 0.8 g/m². When the coating amount is equal to or more than the above lower limit, it tends to be easier to sufficiently express the function as the barrier coat layer. In contrast, when the coating amount is equal to or less than the above upper limit, the barrier coating agent tends to be easily dried.

The drying method is not particularly limited, and examples include a method for drying naturally, a method for drying in an oven set at a predetermined temperature, a method for using a drying machine attached to the coater (e.g., an arch dryer, a floating dryer, a drum dryer, and an infrared dryer). The drying conditions can be selected as appropriate depending on the drying method, but can be, for example, 55 to 70°C for 1 to 1.5 minutes.

Examples of the carboxylic acid polymer include an ethylenically unsaturated carboxylic acid polymer; a copolymer of an ethylenically unsaturated carboxylic acid monomer and another ethylenically unsaturated monomer; and acidic polysaccharides having a carboxyl group in a molecule of alginic acid, carboxymethyl cellulose, pectin, or the like. The ethylenically unsaturated carboxylic acid may be, for example, acrylic acid, methacrylic acid, itaconic acid, maleic acid, fumaric acid, or crotonic acid. The ethylenically unsaturated monomer may be, for example, a saturated carboxylic acid vinyl ester monomer (ethylene, propylene, vinyl acetate, or the like), an alkyl acrylate monomer, an alkyl methacrylate monomer, an alkyl itaconate monomer, vinyl chloride, vinylidene chloride, styrene, acrylamide, acrylonitrile, or the like. The barrier coat layer may contain a plurality of types of carboxylic acid polymers.

From the viewpoint of gas barrier performance, the carboxylic acid polymer may be a polymer containing a constituent unit derived from at least one polymerizable monomer selected from the group consisting of acrylic acid, maleic acid, methacrylic acid, itaconic acid, fumaric acid, and crotonic acid.

The number average molecular weight of the carboxylic acid polymer can be, for example, 2,000 to 10,000,000, and may be 5,000 to 1,000,000. When the number average molecular weight of the carboxylic acid polymer is 2,000 or more, the barrier coat layer easily exhibits good water resistance. When the number average molecular weight of the carboxylic acid polymer is 10,000,000 or less, it tends to be easy to form the barrier coat layer. The number average molecular weight of the carboxylic acid polymer is obtained by gel permeation chromatography (GPC) and expressed relative to polystyrene.

The content of the carboxylic acid polymer in the barrier coat layer can be 30 to 80 mass%, and may be 45 to 75 mass%, relative to the total amount of the barrier coat layer. Increasing the content of the carboxylic acid polymer may slightly reduce the barrier performance.

The polyvalent metal compound is, for example, polyvalent metal, or oxide, hydroxide, carbonate, organic acid salt (e.g., acetate), or inorganic acid salt of polyvalent metal, or the like. The polyvalent metal compound may be an ammonium complex or secondary to quaternary amine complexes of a polyvalent metal oxide, or carbonate or organic acid salt thereof. Examples of the polyvalent metal of the polyvalent metal compound include an alkaline earth metal, transition metal, and aluminum. The alkaline earth metal may be, for example, beryllium, magnesium, or calcium. The transition metal may be, for example, titanium, zirconium, chromium, manganese, iron, cobalt, nickel, copper, zinc, or the like. From the viewpoint of heat resistance, manufacturability, and the like, the polyvalent metal compound may be an oxide, hydroxide, chloride, carbonate, or acetate of alkaline earth metal, cobalt, nickel, copper, zinc, or aluminum. Alternatively, from the above viewpoint, the polyvalent metal compound may be an ammonium complex of copper or zinc. From the viewpoint of industrial productivity, the polyvalent metal compound may be zinc oxide, aluminum oxide, calcium hydroxide, calcium carbonate, zinc acetate, or calcium acetate. Furthermore, considering the viewpoint of heat resistance, water resistance, and transparency, the polyvalent metal compound may be zinc oxide or calcium carbonate. The polyvalent metal compound may be particles having an average primary particle diameter of 10 to 1000 nm.

A part of the carboxy group contained in the carboxylic acid polymer may be neutralized with the polyvalent metal compound. In this case, the oxygen barrier performance and heat resistance of the barrier coat layer are easily improved.

The content of the polyvalent metal compound in the barrier coat layer as the molar ratio relative to the carboxyl group of the carboxylic acid polymer, which is taken as 1, can be 0.3 to 1.5, and may be 0.1 to 2.0. When the above molar ratio of the polyvalent metal compound is 0.3 or more, the barrier performance tends to improve.

From the viewpoint of improvement of adhesion to the adjacent layer, the barrier coat layer may contain at least one silicon-containing compound selected from the group consisting of silane coupling agents, hydrolysates of silane coupling agents, and condensates of silane coupling agents and hydrolysates thereof. In this case, the heat resistance, water resistance, and the like of the barrier coat layer can be improved. The silane coupling agent may be, for example, 3-glycidoxypropyltrimethoxysilane, 3-glycidoxypropyltriethoxysilane, 3-aminopropyltrimethoxysilane, 3-aminopropyltriethoxysilane, or the like. The hydrolysate of the silane coupling agent is a hydrolysate in which at least one of alkyl groups bound to oxygen of the coupling agent is substituted by a hydroxyl group. The condensate of the hydrolysate of the silane coupling agent may be, for example, a condensate in which Si-OH groups of hydrolysates of two molecules are condensed to form a Si-O-Si bond (siloxane bond). When the barrier coat layer contains a silicon-containing compound, the mass ratio of the carboxylic acid polymer and the silicon-containing compound is, for example, 99.5:0.5 to 80:20. In this case, a packaging material having excellent abuse resistance is obtained. Further, peeling between the barrier coat layer and its adjacent layer is less likely to occur. In addition, the barrier coat layer is more likely to have a uniform thickness, and the barrier coat layer can have good acid resistance.

The barrier coat layer may contain various additives. Examples of the additives include a plasticizer, a resin, a dispersant, a surfactant, a softener, a stabilizer, an anti-blocking agent, a film forming agent, a tackifier, and an oxygen absorber.

The thickness of the barrier coat layer can be, for example, 0.01 to 5 µm, and may be 0.01 to 4 µm, 0.02 to 3 µm, or 0.04 to 1.2 µm. When the thickness of the barrier coat layer is 0.01 µm or more, gas barrier performance is easily exhibited well. When the thickness of the barrier coat layer is 5 µm or less, it is easy to suppress decrease in the flexibility of the packaging material.

### [Inorganic vapor deposition layer]

The inorganic vapor deposition layer has the function of improving the barrier performance (particularly gas barrier performance) of the packaging material. Examples of the constituent material of the inorganic vapor deposition layer include inorganic oxides, such as aluminum oxide, silicon oxide, magnesium oxide, and tin oxide. Therefore, the inorganic vapor deposition layer can be regarded as an inorganic oxide layer. From the viewpoint of transparency and barrier performance, the inorganic oxide may be selected from the group consisting of aluminum oxide, silicon oxide, and magnesium oxide. Further, from the viewpoint of cost, the inorganic oxide may be selected from aluminum oxide and silicon oxide. Further, from the viewpoint of excellent tensile stretchability during processing, the inorganic oxide may be silicon oxide. Due to the use of the inorganic vapor deposition layer, high barrier performance can be obtained with a very thin layer that does not affect the recyclability of the gas barrier laminate.

When aluminum oxide is selected as the inorganic vapor deposition layer, the O/Al ratio may be 1.4 or more. When the O/Al ratio is 1.4 or more, the content ratio of metal Al is suppressed, and excellent transparency is easily obtained. The O/Al ratio may also be 1.7 or less. When the O/Al ratio is 1.7 or less, the inorganic vapor deposition layer is prevented from becoming too hard, making it easier to obtain good tensile resistance. Further, the intermediate layer substrate layer may shrink due to the heat during hot-water treatment, such as boiling treatment or retort treatment, of the packaging bag; however, because the O/Al ratio is 1.7 or less, the inorganic vapor deposition layer can easily follow the shrinkage of the intermediate layer substrate layer, making it easy to suppress the decrease in barrier performance. From the viewpoint of obtaining these effects more sufficiently, the O/Al ratio of the aluminum oxide layer can be 1.45 to 1.65, and may be 1.5 to 1.55.

When silicon oxide is selected as the inorganic vapor deposition layer, the O/Si ratio may be 1.7 or more. When the O/Si ratio is 1.7 or more, the content ratio of metal Si is suppressed, and excellent transparency is easily obtained. The O/Si ratio may also be 2.0 or less. When the O/Si ratio is 2.0 or less, the inorganic vapor deposition layer is prevented from becoming too hard, making it easier to obtain good tensile resistance. Further, the intermediate layer substrate layer may shrink due to the heat during hot-water treatment, such as boiling treatment or retort treatment, of the packaging bag; however, because the O/Si ratio is 2.0 or less, the inorganic vapor deposition layer can easily follow the shrinkage of the intermediate layer substrate layer, making it easy to suppress the decrease in barrier performance. From the viewpoint of obtaining these effects more sufficiently, the O/Si ratio of the silicon oxide layer can be 1.75 to 1.9, and may be 1.8 to 1.85.

The O/Al ratio and O/Si ratio of the inorganic vapor deposition layer can be determined by X-ray photoelectron spectroscopy (XPS). For example, these ratios can be measured by using an X-ray photoelectron spectroscopy analyzer (trade name: JPS-90MXV, produced by JEOL Ltd.) as the measurement device under the following conditions: X-ray source: X-ray source: non-monochromatized MgKα (1253.6 eV) and X-ray output: 100 W (10 kV-10 mA).

The thickness of the inorganic vapor deposition layer may be 5 to 300 nm. When the thickness is 5 nm or more, sufficient barrier performance can be easily obtained. Further, when the thickness is 300 nm or less, the occurrence of cracking due to deformation caused by internal stress in the layer is suppressed, making it easier to suppress decrease in barrier performance. If the thickness exceeds 300 nm, the cost is likely to increase due to the increase in the amount of material used, the longer time required for layer formation, and the like.

The inorganic vapor deposition layer can be formed by, for example, a vacuum deposition method. Examples of the vacuum deposition method include physical vapor deposition and chemical vapor deposition. Examples of the physical vapor deposition include, but are not limited to, vacuum vapor deposition, sputtering, and ion plating. Examples of the chemical vapor deposition include, but are not limited to, thermal CVD, plasma CVD, and photo CVD.

### [Anchor coat layer]

An anchor coat layer may be provided on the intermediate layer substrate layer. The anchor coat layer results in the effects of, for example, improving the adhesion between the intermediate layer substrate layer and its adjacent layer, and improving the surface smoothness of the intermediate layer substrate layer. As a result of improving the surface smoothness of the intermediate layer substrate layer, it is easier to form a uniform inorganic vapor deposition layer without defects, and high barrier performance can be easily exhibited.

The thickness of the anchor coat layer is not particularly limited, but can be 0.01 to 5 µm, and may be 0.03 to 3 µm or 0.04 to 2 µm. When the thickness of the anchor coat layer is equal to or more than the above lower limit value, more sufficient interlayer adhesion strength tends to be obtained. In contrast, when the thickness of the anchor coat layer is equal to or less than the above upper limit value, the desired gas barrier performance tends to be easily exhibited.

The anchor coat layer can be formed by using an anchor coating agent. Example of the anchor coating agent include polyester polyurethane resins, polyether polyurethane resins, acrylic polyurethane resins, and the like. Among these, the anchor coating agent may be an acrylic polyurethane resin, from the viewpoint of heat resistance and interlayer adhesion strength.

Examples of the method for forming the anchor coat layer on the intermediate layer substrate layer include the same methods for the barrier coat layer.

The coating amount of the anchor coat layer (the mass per m² after applying the anchor coating agent and drying) can be 0.01 to 5 g/m², and may be 0.03 to 3 g/m². When the coating amount is equal to or more than the above lower limit, film formation tends to be sufficient. In contrast, when the coating amount is equal to or less than the above upper limit, drying tends to be sufficient and the solvent tends to be less likely to remain.

The anchor coating agent may contain a silane coupling agent, from the viewpoint of improving the adhesion between the intermediate layer substrate layer and its adjacent layer. A silane coupling agent containing any organic functional group can be used; in particular, a silane coupling agent having a functional group that reacts with the hydroxyl group of a polyol or the isocyanate group of an isocyanate compound can be used. Examples of silane coupling agents include those containing an isocyanate group, such as γ-isocyanatopropyltriethoxysilane and γ-isocyanatopropyltrimethoxysilane; those containing a mercapto group, such as γ-mercaptopropyltriethoxysilane; those containing an amino group, such as γ-aminopropyltriethoxysilane, γ-aminopropyltrimethoxysilane, N-β-(aminoethyl)-γ-aminopropyltriethoxysilane, and γ-phenylaminopropyltrimethoxysilane; those containing an epoxy group, such as γ-glycidoxypropyltrimethoxysilane and β-(3,4-epoxycyclohexyl)ethyltrimethoxysilane; those containing a vinyl group, such as vinyltrimethoxysilane and vinyltris(β-methoxyethoxy)silane; those containing an acryloyl group, such as γ-methacryloxypropyltrimethoxysilane and γ-methacryloxypropylmethyldimethoxysilane; γ-chloropropylmethyldimethoxysilane, γ-chloropropyltrimethoxysilane, and the like; and hydrolysates thereof. These can be used singly or in combination of two or more.

The amount of the silane coupling agent can be 0.1 to 100 parts by mass, and may be 1 to 50 parts by mass, based on 100 parts by mass of the resin (main agent) that forms the anchor coat layer.

### (Sealant layer)

The sealant layer is made of a material that has a lower melting point than that of the constituent materials of the substrate layer and intermediate layer substrate layer, and has heat sealability. The sealant layer is a polyolefin resin layer or a polyester resin layer.

Examples of the polyolefin used to form the polyolefin resin layer include polyethylene, polypropylene, polymethylpentene, an ethylene-propylene copolymer, a propylene-butene copolymer, and the like. Among these, polyethylene and polypropylene can be preferably used, from the viewpoint of productivity. Examples of polypropylene include low-density polyethylene (LDPE), linear low-density polyethylene (LLDPE), and the like, and LLDPE can be preferably used, from the viewpoint of barrier performance. Examples of polypropylene include unstretched polypropylene (CPP).

Examples of the polyester used to form the polyester resin layer include crystalline polyester, and specific examples include polybutylene terephthalate (PBT), polybutylene naphthalate (PBN), polyethylene terephthalate (PET), and the like. The crystallinity of the polyester resin layer can be 14% or less, and may be 13.5% or less, or 13% or less. The lower limit of the crystallinity is not particularly limited, but can be 2.5% from the viewpoint of strength. As the polyester that forms the polyester resin layer, amorphous polyester (e.g., amorphous PET) may be used.

The sealant layer may contain various types of additives such as a flame retardant, a slip agent, an anti-blocking agent, an antioxidant, a light stabilizer, and a tackifier.

The thickness of the sealant layer is determined by the content mass, the shape of the packaging bag, and the like, and can be, for example, 30 to 150 µm.

### (Adhesive layer)

The adhesive layer may be formed by using an adhesive such as a one-component or two-component curable urethane adhesive (dry lamination method) or by using a solvent-free adhesive (non-solvent dry lamination method).

As described above, all of the main films that form the packaging material (substrate layer, intermediate layer substrate layer, and sealant layer) can be polyolefin resin layers or polyester resin layers. Such a packaging material can be regarded as a material consisting of a single material (mono-material) with excellent recyclability. From this point of view, the total mass of components other than the polyolefin or polyester (other than these main films) can be 10 mass% or less, and may be 7.5 mass% or less, or 5.0 mass% or less, based on the total mass of the packaging material.

### < Packaging bag and packaging body>

A packaging bag can be obtained by heat-sealing the sealant layers of the packaging materials obtained as described above. A packaging body can be obtained in such a manner that the-thus obtained packaging bag is filled with a content containing a sulfur-containing amino acid and sealed, and heat sterilization treatment, such as such as boiling treatment or retort treatment, is performed. Boiling treatment is a heating treatment at 80 to 98°C for 10 to 100 minutes, and retort treatment is a heating treatment at 121 to 200°C for 15 to 100 minutes. As a result of the heat sterilization treatment, carboxylic acid polymers are crosslinked with each other by polyvalent metal ions in the barrier coat layer, and excellent barrier performance is exhibited. That is, the packaging body comprises the above packaging bag and a content containing a sulfur-containing amino acid packaged in the packaging bag, and can be regarded as a packaging body with a barrier coat layer having a crosslinked structure in which carboxylic acid polymers are crosslinked with each other via polyvalent metal ions.

The packaging bag may contain only a content containing a sulfur-containing amino acid (vacuum packaging), or may contain a content containing a sulfur-containing amino acid and gas. Examples of the gas include air, inert gas, and the like; however, from the viewpoint of suppressing the deterioration of the content, the gas can be an inert gas.

### [Examples]

The invention is more particularly described by way of examples, to which the present disclosure should not be construed as limited.

### (Preparation of intermediate layer substrate layer)

Biaxially stretched polypropylene film (OPP, double-side corona treatment, thickness: 20 µm) High-density polyethylene film (HDPE, double-side corona treatment, thickness 25: µm)

### (Preparation of anchor coating agent)

1. γ-Isocyanatopropyltrimethoxysilane and acrylic polyol were mixed and stirred at a mass ratio of 1:5. The acrylic polyol used was GS-5756 produced by Mitsubishi Chemical Corporation.
2. To the combined solution obtained in step 1 above, tolylene diisocyanate (TDI) was added as an isocyanate compound. At this time, the amount of TDI was adjusted so that the amount of NCO groups in TDI was equal to the amount of OH groups in the acrylic polyol.
3. Ethyl acetate was added to the combined solution obtained in step 2 above to dilute it to a solid concentration of 2 mass%, thereby obtaining an anchor coating agent.

### (Preparation of barrier coating agent)

1. Polyacrylic acid (PAA) as a carboxylic acid polymer was heated and dissolved in 2-propanol (IPA) to prepare a 10 mass% polyacrylic acid solution. The polyacrylic acid used was JURYMER (registered trademark) AC-10LP (number average molecular weight: 50000) produced by Toagosei Co., Ltd.
2. 1.8 g of polyether phosphate as a dispersant was dissolved in 26.2 g of 2-propanol (IPA), and 12 g of zinc oxide with an average primary particle diameter of 35 nm was added and stirred. The polyether phosphate used was DISPARLON (registered trademark) DA-375 (solids content: 100 mass%) produced by Kusumoto Chemicals, Ltd. The zinc oxide used was FINEX (registered trademark)-30 produced by Sakai Chemical Industry Co., Ltd.
3. After treating the combined solution obtained in step 2 above in a planetary ball mill for 1 hour, the beads were sieved from the solution to obtain a dispersion containing zinc oxide at a concentration of 30 mass%. The planetary ball mill used was a P-7 produced by Fritsch, and the beads used were zirconia beads with a diameter of 0.2 mm.
4. 31.20 g of the polyacrylic acid solution and 5.79 g of the zinc oxide dispersion obtained in steps 1 and 3 above were mixed with 0.08 g of a silane coupling agent and 23.57 g of 2-propanol (IPA).

The silane coupling agent (silicon compound) used was KBM-403 (3-glycidoxypropyl trimethoxysilane) produced by Shin-Etsu Chemical Co., Ltd. A barrier coating agent was obtained in this manner.

### (Production of packaging bag)

### [Example 1]

According to the following procedure, a packaging material having a layer structure of OPP/barrier coat layer/inorganic vapor deposition layer/anchor coat layer/OPP/CPP was used to produce a packaging bag.
1. Production of intermediate layer
   a. The anchor coating agent was applied to one surface of a biaxially stretched polypropylene film (OPP, double-side corona treatment, thickness: 20 µm) using a bar coater. The coating film was dried in an oven at 50°C for 1 minute to form an anchor coat layer with a thickness of 0.2 µm.
   b. On the anchor coat layer formed in step a above, silica was deposited using a vacuum vapor deposition device based on an electron beam heating method to form a silica deposition layer with a thickness of 40 nm.
   c. The barrier coating agent was applied to the inorganic vapor deposition layer formed in step b above using a bar coater. The coating film was dried in an oven at 60°C for 1 minute to form a barrier coat layer with a thickness of 500 nm. An intermediate layer was obtained in this manner.
2. Lamination of substrate layer, intermediate layer, and sealant layer
   a. The corona-treated surface of a substrate layer (biaxially stretched polypropylene film, single-side corona treatment, thickness: 20 µm) was dry-laminated on the barrier coat layer side of the intermediate layer. The adhesive used was a two-component curable urethane adhesive A525 (Takelac produced by Mitsui Chemicals, Inc., adhesive main agent)/A52 (Takenate produced by Mitsui Chemicals, Inc., adhesive hardener).
   b. The corona-treated surface of a sealant layer (unstretched polypropylene film, single-side corona treatment, thickness: 60 µm) was dry-laminated on the biaxially stretched polypropylene film side of the intermediate layer. A525/A52 was used as the adhesive. A packaging material was obtained in this manner.
3. Production of packaging bag
   The sealant layer surfaces of the resulting packaging material were heat-sealed to produce a packaging bag.

### (Various evaluation)

1. The packaging bag was filled with 150 g of 0.3 mass% L-cysteine aqueous solution as contents through the opening, and the opening was heat-sealed to obtain a packaging body.
2. The obtained packaging body was subjected to retort treatment at 130°C for 30 minutes. The estimated amount of hydrogen sulfide generated in this case was about 100 ppm.
3. After retort treatment, the contents were removed from the packaging bag, the packaging bag was washed and dried, and then the oxygen transmission rate (OTR: temperature: 30°C, relative humidity: 70%) and water vapor transmission rate (WVTR: temperature: 40°C, relative humidity: 90%) of the packaging bag were measured by the Mocon method. Table 1 shows the results.

### [Example 2]

A packaging bag was produced and a packaging body was evaluated in the same manner as in Example 1, except that an alumina deposition layer was used in place of the silica deposition layer. The alumina deposition layer was formed as described below.

On the anchor coat layer, by using a vacuum vapor deposition device based on an electron beam heating method, aluminum was evaporated while oxygen gas was introduced thereto to form an alumina deposition layer with a thickness of 10 nm.

### [Example 3]

A packaging body was evaluated in the same manner as in Example 1, except that 150 g of pet food was introduced in place of 150 g of the 0.3 mass% L-cysteine aqueous solution.

### [Example 4]

A packaging body was evaluated in the same manner as in Example 2, except that 150 g of pet food was introduced in place of 150 g of the 0.3 mass% L-cysteine aqueous solution.

### [Reference Example 1]

A packaging body was evaluated in the same manner as in Example 1, except that 150 g of water was introduced in place of 150 g of the 0.3 mass% L-cysteine aqueous solution.

### [Reference Example 2]

A packaging body was evaluated in the same manner as in Example 2, except that 150 g of water was introduced in place of 150 g of the 0.3 mass% L-cysteine aqueous solution.

### [Comparative Example 1]

A packaging bag having a layer structure of OPP/OPP/anchor coat layer/inorganic vapor deposition layer/barrier coat layer/CPP was produced. That is, the packaging material was produced in the same manner as in Example 1, except that the orientation of the barrier coat layer of the intermediate layer was changed as described below. This packaging material was used to produce a packaging bag, and a packaging body was evaluated.
a. The corona-treated surface of a substrate layer was dry-laminated on the biaxially stretched polypropylene film side of the intermediate layer.
b. The corona-treated surface of a sealant layer was dry-laminated on the barrier coat layer side of the intermediate layer.

### [Comparative Example 2]

According to Comparative Example 1, a packaging material was produced in the same manner as in Example 2, except that the orientation of the barrier coat layer of the intermediate layer was changed as described below. This packaging material was used to produce a packaging bag, and a packaging body was evaluated.

### [Comparative Example 3]

A packaging body was evaluated in the same manner as in Comparative Example 1, except that 150 g of pet food was introduced in place of 150 g of the 0.3 mass% L-cysteine aqueous solution.

### [Comparative Example 4]

A packaging body was evaluated in the same manner as in Comparative Example 2, except that 150 g of pet food was introduced in place of 150 g of the 0.3 mass% L-cysteine aqueous solution.

### [Reference Example 3]

A packaging body was evaluated in the same manner as in Comparative Example 1, except that 150 g of water was introduced in place of 150 g of the 0.3 mass% L-cysteine aqueous solution.

### [Reference Example 4]

A packaging body was evaluated in the same manner as in Comparative Example 2, except that 150 g of water was introduced in place of 150 g of the 0.3 mass% L-cysteine aqueous solution.

**[Table 1]**

| | Inorganic vapor deposition layer | Orientation of barrier coat layer | Contents | OTR | WVTR |
|---|---|---|---|---|---|
| Reference Example 1 | Silica | Substrate layer side | Water | 0.4 | 1.5 |
| Reference Example 2 | Alumina | Substrate layer side | Water | 0.3 | 1.8 |
| Example 1 | Silica | Substrate layer side | L-cysteine | 7 | 2 |
| Example 2 | Alumina | Substrate layer side | L-cysteine | 0.5 | 2 |
| Example 3 | Silica | Substrate layer side | Pet food | 3 | 2 |
| Example 4 | Alumina | Substrate layer side | Pet food | 0.4 | 2 |
| Reference Example 3 | Silica | Sealant layer side | Water | 0.6 | 1.8 |
| Reference Example 4 | Alumina | Sealant layer side | Water | 0.5 | 2.0 |
| Comparative Example 1 | Silica | Sealant layer side | L-cysteine | 50 | 4 |
| Comparative Example 2 | Alumina | Sealant layer side | L-cysteine | 11 | 2 |
| Comparative Example 3 | Silica | Sealant layer side | Pet food | 48 | 3.5 |
| Comparative Example 4 | Alumina | Sealant layer side | Pet food | 10 | 2 |

| | | | | | |
|---|---|---|---|---|---|
| *OTR unit: cc/m²·day atm, WVTR unit: g/m²·day | | | | | |

### (Production of packaging bag)

### [Example 5]

According to the following procedure, a packaging material having a layer structure of HDPE/barrier coat layer/inorganic vapor deposition layer/anchor coat layer/HDPE/LLDPE was used to produce a packaging bag.

### 1. Production of intermediate layer

An intermediate layer was produced in the same manner as in Example 1, except that a high-density polyethylene film (HDPE, double-side corona treatment, thickness: 25 µm) was used as the intermediate layer substrate layer in place of the biaxially stretched polypropylene film.

### 2. Lamination of substrate layer, intermediate layer, and sealant layer

An intermediate layer was produced in the same manner as in Example 1, except that a high-density polyethylene film (HDPE, single-side corona treatment, thickness: 25 µm) was used as the substrate layer in place of the biaxially stretched polypropylene film, and a linear low-density polyethylene film (LLDPE, single-side corona treatment, thickness: 60 µm) was used as the sealant layer in place of the unstretched polypropylene film.

### 3. Production of packaging bag

The sealant layer surfaces of the resulting packaging material were heat-sealed to produce a packaging bag.

### (Various evaluation)

1. The packaging bag was filled with 150 g of 0.3 mass% L-cysteine aqueous solution as contents through the opening, and the opening was heat-sealed to obtain a packaging body.
2. The obtained packaging body was subjected to boiling treatment at 95°C for 60 minutes. The estimated amount of hydrogen sulfide generated in this case was about 80 ppm.
3. After boiling treatment, the contents were removed from the packaging bag, the packaging bag was washed and dried, and then the oxygen transmission rate (OTR: temperature: 30°C, relative humidity: 70%) and water vapor transmission rate (WVTR: temperature: 40°C, relative humidity: 90%) of the packaging bag were measured by the Mocon method. Table 2 shows the results.

### [Example 6]

A packaging bag was produced and a packaging body was evaluated in the same manner as in Example 5, except that an alumina deposition layer was used in place of the silica deposition layer. The alumina deposition layer was formed in the same manner as in Example 2.

### [Example 7]

A packaging body was evaluated in the same manner as in Example 5, except that 150 g of pet food was introduced in place of 150 g of the 0.3 mass% L-cysteine aqueous solution.

### [Example 8]

A packaging body was evaluated in the same manner as in Example 6, except that 150 g of pet food was introduced in place of 150 g of the 0.3 mass% L-cysteine aqueous solution.

### [Reference Example 5]

A packaging body was evaluated in the same manner as in Example 5, except that 150 g of water was introduced in place of 150 g of the 0.3 mass% L-cysteine aqueous solution.

### [Reference Example 6]

A packaging body was evaluated in the same manner as in Example 6, except that 150 g of water was introduced in place of 150 g of the 0.3 mass% L-cysteine aqueous solution.

### [Comparative Example 5]

A packaging material having a layer structure of HDPE/HDPE/anchor coat layer/inorganic vapor deposition layer/barrier coat layer/LLDPE was produced. That is, the packaging material was produced in the same manner as in Example 5, except that the orientation of the barrier coat layer of the intermediate layer was changed as described below. This packaging material was used to produce a packaging bag, and a packaging body was evaluated.
a. The corona-treated surface of a substrate layer was dry-laminated on the high-density polyethylene film side of the intermediate layer.
b. The corona-treated surface of a sealant layer was dry-laminated on the barrier coat layer side of the intermediate layer.

### [Comparative Example 6]

According to Comparative Example 5, a packaging material was produced in the same manner as in Example 6, except that the orientation of the barrier coat layer of the intermediate layer was changed as described below. This packaging material was used to produce a packaging bag, and a packaging body was evaluated.

### [Comparative Example 7]

A packaging body was evaluated in the same manner as in Comparative Example 5, except that 150 g of pet food was introduced in place of 150 g of the 0.3 mass% L-cysteine aqueous solution.

### [Comparative Example 8]

A packaging body was evaluated in the same manner as in Comparative Example 6, except that 150 g of pet food was introduced in place of 150 g of the 0.3 mass% L-cysteine aqueous solution.

### [Reference Example 7]

A packaging body was evaluated in the same manner as in Comparative Example 5, except that 150 g of water was introduced in place of 150 g of the 0.3 mass% L-cysteine aqueous solution.

### [Reference Example 8]

A packaging body was evaluated in the same manner as in Comparative Example 6, except that 150 g of water was introduced in place of 150 g of the 0.3 mass% L-cysteine aqueous solution.

**[Table 2]**

| | Inorganic vapor deposition layer | Orientation of barrier coat layer | Contents | OTR | WVTR |
|---|---|---|---|---|---|
| Reference Example 5 | Silica | Substrate layer side | Water | 0.8 | 1.5 |
| Reference Example 6 | Alumina | Substrate layer side | Water | 0.5 | 1.8 |
| Example 5 | Silica | Substrate layer side | L-cysteine | 7 | 2 |
| Example 6 | Alumina | Substrate layer side | L-cysteine | 1 | 2 |
| Example 7 | Silica | Substrate layer side | Pet food | 4 | 2 |
| Example 8 | Alumina | Substrate layer side | Pet food | 1 | 2 |
| Reference Example 7 | Silica | Sealant layer side | Water | 1.0 | 1.8 |
| Reference Example 8 | Alumina | Sealant layer side | Water | 0.8 | 2.0 |
| Comparative Example 5 | Silica | Sealant layer side | L-cysteine | 49 | 8 |
| Comparative Example 6 | Alumina | Sealant layer side | L-cysteine | 10 | 4 |
| Comparative Example 7 | Silica | Sealant layer side | Pet food | 50 | 7 |
| Comparative Example 8 | Alumina | Sealant layer side | Pet food | 11 | 4 |

| | | | | | |
|---|---|---|---|---|---|
| *OTR unit: cc/m²·day atm, WVTR unit: g/m²·day | | | | | |

### (Production of packaging bag)

### [Example 9]

According to the following procedure, a packaging material having a layer structure of PET/barrier coat layer/inorganic vapor deposition layer/anchor coat layer/PET/amorphous PET was used to produce a packaging bag.

### 1. Production of intermediate layer

An intermediate layer was produced in the same manner as in Example 2, except that a crystalline polyethylene terephthalate film (PET, double-side corona treatment, thickness: 12 µm, crystallinity: 55%) was used as the intermediate layer substrate layer in place of the biaxially stretched polypropylene film.

### 2. Lamination of substrate layer, intermediate layer, and sealant layer

An intermediate layer was produced in the same manner as in Example 2, except that crystalline PET (single-side corona treatment, thickness: 12 µm) was used as the substrate layer in place of the biaxially stretched polypropylene film, and amorphous PET (single-side corona treatment, thickness: 30 µm) was used as the sealant layer in place of the unstretched polypropylene film.

### 3. Production of packaging bag

The sealant layer surfaces of the resulting packaging material were heat-sealed to produce a packaging bag.

### (Various evaluation)

1. The packaging bag was filled with 150 g of 0.3 mass% L-cysteine aqueous solution as contents through the opening, and the opening was heat-sealed to obtain a packaging body.
2. The obtained packaging body was subjected to boiling treatment at 95°C for 60 minutes. The estimated amount of hydrogen sulfide generated in this case was about 80 ppm.
3. After boiling treatment, the contents were removed from the packaging bag, the packaging bag was washed and dried, and then the oxygen transmission rate (OTR: temperature: 30°C, relative humidity: 70%) and water vapor transmission rate (WVTR: temperature: 40°C, relative humidity: 90%) of the packaging bag were measured by the Mocon method. Table 3 shows the results.

### [Example 10]

A packaging body was evaluated in the same manner as in Example 9, except that 150 g of pet food was introduced in place of 150 g of the 0.3 mass% L-cysteine aqueous solution.

### [Reference Example 9]

A packaging body was evaluated in the same manner as in Example 9, except that 150 g of water was introduced in place of 150 g of the 0.3 mass% L-cysteine aqueous solution.

### [Comparative Example 9]

A packaging material having a layer structure of PET/PET/anchor coat layer/inorganic vapor deposition layer/barrier coat layer/amorphous PET was produced. That is, the packaging material was produced in the same manner as in Example 9, except that the orientation of the barrier coat layer of the intermediate layer was changed as described below. This packaging material was used to produce a packaging bag, and a packaging body was evaluated.
a. The corona-treated surface of a substrate layer was dry-laminated on the amorphous PET side of the intermediate layer.
b. The corona-treated surface of a sealant layer was dry-laminated on the barrier coat layer side of the intermediate layer.

### [Comparative Example 10]

A packaging body was evaluated in the same manner as in Comparative Example 9, except that 150 g of pet food was introduced in place of 150 g of the 0.3 mass% L-cysteine aqueous solution.

### [Reference Example 10]

A packaging body was evaluated in the same manner as in Comparative Example 9, except that 150 g of water was introduced in place of 150 g of the 0.3 mass% L-cysteine aqueous solution.

**[Table 3]**

| | Inorganic vapor deposition layer | Orientation of barrier coat layer | Contents | OTR | WVTR |
|---|---|---|---|---|---|
| Reference Example 9 | Alumina | Substrate layer side | Water | 0.1 | 1 |
| Example 9 | Alumina | Substrate layer side | L-cysteine | 0.15 | 1 |
| Example 10 | Alumina | Substrate layer side | Pet food | 0.15 | 1 |
| Reference Example 10 | Alumina | Sealant layer side | Water | 0.1 | 1 |
| Comparative Example 9 | Alumina | Sealant layer side | L-cysteine | 4 | 3 |
| Comparative Example 10 | Alumina | Sealant layer side | Pet food | 3 | 3 |

| | | | | | |
|---|---|---|---|---|---|
| *OTR unit: cc/m²·day atm, WVTR unit: g/m²·day | | | | | |

### [Industrial Applicability]

The packaging material according to the present invention can suitably package contents containing sulfur-containing amino acids. Further, in the packaging material according to the present invention, the amount of polyolefin or polyester accounting for the total amount of the packaging material can be 90 mass% or more, and material recycling is possible.

### [Reference Signs List]

- 1: Substrate layer
- 2: Intermediate layer
- 2a: Intermediate layer substrate layer
- 2b: Barrier coat layer
- 2c: Anchor coat layer
- 2d: Inorganic vapor deposition layer
- 3: Sealant layer
- 10, 20: Packaging material

## Claims

1. A packaging material comprising a substrate layer, an intermediate layer, and a sealant layer,
the intermediate layer comprising an intermediate layer substrate layer and a barrier coat layer containing a carboxylic acid polymer and a polyvalent metal compound,
the intermediate layer being laminated so that the barrier coat layer is on a substrate layer side, and
all of the substrate layer, the intermediate layer substrate layer, and the sealant layer being polyolefin resin layers or polyester resin layers.

2. The packaging material according to claim 1, wherein the intermediate layer further comprises an inorganic vapor deposition layer between the intermediate layer substrate layer and the barrier coat layer.

3. The packaging material according to claim 1 or 2, wherein the polyolefin contained in the polyolefin resin layer is polypropylene.

4. The packaging material according to claim 3, wherein the polyolefin contained in the intermediate layer substrate layer is stretched polypropylene

5. The packaging material according to claim 1 or 2, wherein the polyolefin contained in the polyolefin resin layer is polyethylene.

6. The packaging material according to claim 5, wherein the polyolefin contained in the intermediate layer substrate layer is high-density polyethylene.

7. The packaging material according to claim 1 or 2, wherein the polyester contained in the polyester resin layer is polyethylene terephthalate.

8. The packaging material according to claim 7, wherein the polyester contained in the intermediate layer substrate layer is polyethylene terephthalate having a crystallinity of 40% or more.

9. A packaging bag formed from the packaging material according to any one of claims 1 to 8.

10. A packaging body comprising the packaging bag according to claim 9, and a content containing a sulfur-containing amino acid packaged in the packaging bag,
the barrier coat layer having a crosslinked structure in which the carboxylic acid polymers are crosslinked with each other via polyvalent metal ions.
